# EUROPÄISCHE PATENTSCHRIFT

(11) **EP 1 499 848 B1**
(45) Veröffentlichungstag und Bekanntmachung des Hinweises auf die Patenterteilung: **07.04.2010**
(21) Anmeldenummer: 03737865.0
(22) Anmeldetag: 25.04.2003
(51) Int. Cl.: F41H 11/02, H01Q 3/26, H01Q 3/24, H01Q 25/00

(54) **VERFAHREN ZUM DATENAUSTAUSCH ZWISCHEN MILITÄRISCHEN FLUGZEUGEN UND VORRICHTUNG ZUR DURCHFÜHRUNG DIESES VERFAHRENS**
METHOD FOR DATA TRANSMISSION BETWEEN MILITARY AEROPLANES AND DEVICES FOR CARRYING OUT SAID METHOD
PROCEDE D'ECHANGE DE DONNEES UTILES ENTRE DES AVIONS MILITAIRES, ET DISPOSITIF POUR METTRE EN OEUVRE LE PROCEDE

(30) Priorität: 27.04.2002 DE 10219023
(43) Veröffentlichungstag der Anmeldung: 26.01.2005
(73) Patentinhaber: EADS Deutschland GmbH, 85521 Ottobrunn (DE)
(72) Erfinder: HURST, Peter, 82008 Unterhaching (DE); MEHLTRETTER, Ludwig, 85521 Riemerling (DE); VON DER WERTH, Monika, 85630 Grasbrunn (DE)
(86) Internationale Anmeldenummer: PCT/DE2003/001358
(87) Internationale Veröffentlichungsnummer: WO 2003/093756

(56) Entgegenhaltungen:
- EP-A- 0 837 567
- EP-A- 1 187 353
- US-A- 4 851 854
- US-A- 4 899 293
- US-A- 5 027 124
- US-A- 5 883 586
- US-A1- 2001 044 680

## Beschreibung

Die Erfindung betrifft ein Verfahren zur Nutzdatenübertragung zwischen militärischen Flugzeugen über Antennen mit steuerbarer Richtwirkung sowie einer Vorrichtung zur Durchführung des Verfahrens.
Eine solche Vorrichtung ist aus EP 0 837 567 A2 bekannt.

Beim Datenaustausch zwischen militärischen Flugzeugen ist es von größter Wichtigkeit, dass diese in einer von feindlichen Aufklärungssystemen bedrohten Umgebung nicht entdeckt werden. Militärische Flugzeuge wurden zur Datenübertragung bislang mit Rundstrahl-Antennen ausgerüstet, die im Wesentlichen im Azimuth-Bereich senden und empfangen und im Elevationsbereich nur in einem begrenzten Winkelbereich aktiv sind.

Zur Übertragung von Nutzdaten mittels dieser Rundstrahl-Antennen sind sehr hohe Leistungen erforderlich, da die Datenübertragung zum einen wegen der Größe der Datenmengen breitbandig erfolgt und zum anderen die Übertragung mit Rundstrahlcharakteristik nur mit großem Energieaufwand realisierbar ist. Dadurch ergibt sich ein sehr ungünstiges Verhältnis zwischen der Ortungs- und Übertragungs-Reichweite. Üblicherweise ist eine minimale Sendeleistung von 1 Watt erforderlich, woraus sich eine Übertragungs-Reichweite für die Nutzdaten von ungefähr 50 km ergibt. In diesem Fall ist das sendende Flugzeug jedoch aus einer Entfernung von ungefähr 1000 km ortbar.

Weiterhin sind aus dem Stand der Technik gerichtete Antennen bekannt, das heißt Antennen, die schwenkbare Antennenhauptkeulen zum Senden und Empfangen produzieren. Da die Abstrahlung ebenfalls im Wesentlichen im Azimuth-Bereich erfolgt und somit nur eine kleine Antennenfläche am Flugzeug zur Verfügung steht, ergibt sich auch bei diesen gerichteten Antennen noch ein sehr ungünstiges Verhältnis zwischen der Ortungs- und Übertragungs-Reichweite, das im Bereich zwischen 0,5 und 5 liegt. Üblicherweise werden mit diesen gerichteten Antennen bei einer Nutzdaten-Übertragungsreichweite von 100 km noch eine Ortbarkeit im Bereich von 50 km Reichweite erreicht, wenn sich das feindliche Aufklärungssystem außerhalb der Antennenhauptkeule befindet. Diese Größenverhältnisse werden jedoch nur mit einem besonderen sogenannten Power Management erreicht, das heißt mit einer an die Bedingungen und insbesondere an die Entfernungen zwischen den sendenden und empfangenen Flugzeugen angepassten Übertragungsleistung.

Weiterhin sind aus dem Stand der Technik Nutzdatenübertragungssysteme bekannt, bei denen Satelliten als Relaisstationen eingesetzt werden. Wegen der sehr großen Übertragungsreichweite müssen die Nutzdaten mit großer Leistung gesendet werden, so dass eine große Ortungs-Reichweite entsteht.
Weiterhin sind Laufzeiten bei der Übertragungszeit zu berücksichtigen.
Werden nicht geostationäre Satelliten eingesetzt, sind u.U. mehrere solcher Relaisstationen nötig, was mit hohen Kosten verbunden ist.

Aus der DE 198 53 933 A1 ist eine Antennen-Ausrichtungsanordnung für ein Flugzeug bekannt, die mit einem Lagereferenzsystem des Flugzeugs in Verbindung steht, um die Ausrichtung der Antennenkeule zu steuern.

Es ist die Aufgabe der Erfindung, ein Verfahren bzw. eine Vorrichtung bereit zu stellen, mit dem eine Nutzdatenübertragung zwischen militärischen Flugzeugen in einer Weise erfolgt, bei dem zum einen die Menge der übertragenen Nutzdaten gegenüber dem Stand der Technik nicht reduziert wird und zum anderen die Ortbarkeit in zuverlässiger Weise ausgeschaltet oder zumindest stark reduziert wird.

Diese Aufgabe wird mit den Merkmalen der unabhängigen Patentansprüche gelöst. Weitere Ausführungsformen sind in den auf diese rückbezogenen Unteransprüchen angegeben.

Erfindungsgemäß ist eine Vorrichtung zur Nutzdaten-Übertragung zur Implementierung in einem Flugzeug an ein Relais-Flugzeug über eine Antennen-Anordnung mit steuerbarer Richtwirkung mittels eines Antennen-Ansteuerungsmoduls zur Steuerung der Abstrahlungseigenschaften und Sendeleistung, mit einem Nutzdaten-Sendemodul zur Bereitstellung von Nutzdaten an das Relais-Flugzeug, einer Empfangseinrichtung zum Empfang von Informationen von dem Relais-Flugzeug, und einem Antennen-Ausrichtungsmodul, das einem Fluglagen-Rechner zugeordnet ist, vorgesehen. Dem Ansteuerungsmodul ist ein Bedrohungsbewertungs-System und eine mit diesem in Verbindung stehende Optimierungs-Einrichtung zugeordnet, die zumindest
- ein Soll-Abstrahlprofil von dem Bedrohungsbewertungs-System und
- ein Soll-Richtungsbereich der Antennenkeule von dem Antennen-Ausrichtungsmodul,
empfängt, die durch das Ansteuerungsmodul zu erzeugenden Antennen-Übertragungseigenschaften derart ermittelt, dass die Ortbarkeit in zuverlässigen Weise zumindest stark reduziert wird, und dem Ansteuerungsmodul als Steuerungs-Kommando übermittelt.

Bei der erfindungsgemäßen Vorrichtung zur Nutzdaten-Übertragung können für die Antennen-Übertragungseigenschaften der Winkelbereich, die Nebenzipfeldämpfung für die Abstrahlung der Antennenkeulen und/oder eine maximale Sendeleistung verwendet werden. Das Threat Management System kann weiterhin Informationen über die aktuelle Übertragungsqualität empfangen und verwenden, wobei die aktuelle Übertragungsqualität von der Empfangs-Einrichtung aufgrund von Informationen durch das Relais-Flugzeug ermittelt wird. Die Soll-Richtung der Antennenkeule im Antennen-Ausrichtungsmodul kann aufgrund der relativen Position des sendenden Flugzeugs relativ zum Relais-Flugzeug und der Fluglage des sendenden Flugzeugs ermittelt werden. Eine Entscheidungs-Einrichtung kann mit der Ansteuerungs-Einrichtung in Verbindung stehen, die die Nutzdaten-Übertragung des sendenden Flugzeugs stoppt, wenn die Wahrscheinlichkeit für die Ortbarkeit des sendenden Flugzeugs einen Vergleichswert übersteigt. Die Übertragungseigenschaften durch die Antennen-Steuereinheit können derart eingestellt sein, dass die Nebenzipfeldämpfung mindestens 30 dB ist.

Erfindungsgemäß ist weiterhin ein Verfahren zur Nutzdaten-Übertragung, bei dem Nutzdaten von einem ersten Flugzeug an ein Relais-Flugzeug zur Weitergabe an ein weiteres Flugzeug übertragen werden, vorgesehen, das durch das Zusammenwirken von in den Flugzeugen implementierten Funktionen zur Nutzdaten-Übertragung realisiert ist. Dabei erfolgt in dem sendenden Flugzeug eine Optimierung der Übertragungs-Eigenschaften, bei der ein Soll-Abstrahlprofil von einem Threat Management System, ein Soll-Richtungsbereich der Antennenkeule von einem Antennen-Ausrichtungsmodul, und optional auch die aktuelle Übertragungsqualität der Übertragung zu dem Relais-Flugzeug bewertet werden.

Mit dem erfindungsgemäßen Verfahren bzw. den erfindungsgemäßen Vorrichtungen wird die Ortbarkeit des jeweils sendenden Flugzeugs zuverlässig ausgeschaltet oder zumindest stark reduziert wird. Erfindungsgemäß strahlt das jeweils sendende Flugzeug nur in Richtung des Relaisflugzeugs also nicht im Azimuth-Winkelbereich. Demgegenüber ist es durch entsprechende, an den Tragflächen des Flugzeuges leicht anzubringende Antennen möglich, schmale, etwa vertikal zur Erdoberfläche strahlende Antennenhauptkeulen zu einem zweiten Flugzeug zu senden, das oberhalb des sendenden Flugzeugs fliegt. Dabei kann das höher fliegende Flugzeug insbesondere bei der Weitergabe von Nutzdaten an weitere Flugzeuge ortbar sein, was jedoch kein Nachteil ist, wenn dieses in ausreichender Höhe fliegt und in einem relativ gering bedrohten Bereich fliegt.

Im folgenden wird die Erfindung anhand der beiliegenden Figuren beschrieben, die zeigen:
- Figur 1 eine schematische Darstellung des Geländes mit einem tieffliegenden Flugzeug, das die aus dem Stand der Technik bekannte Rundstrahl-Antennen-Vorrichtung und -Charakteristik aufweist, mit einem empfangenden höherfliegenden Flugzeug und mit einer beispielhaft gezeigten Ortungsstation, die in Bezug auf die dargestellten Flugzeuge als feindlich angesehen wird,
- Figur 2 eine schematische Darstellung eines Flugzeugs, das zum Senden von Nutzdaten eine erfindungsgemäße Antennenanordnung aufweist, mit dem das erfindungsgemäße Verfahren durchgeführt werden kann,
- Figur 3 eine Ausführungsform einer Antennen-Vorrichtung, die zur Verwendung mit der erfindungsgemäßen Vorrichtung bzw. dem erfindungsgemäßen Verfahren vorgesehen ist,
- Figur 4 eine Ausführungsform der erfindungsgemäßen Vorrichtung zur Nutzdatenübertragung.

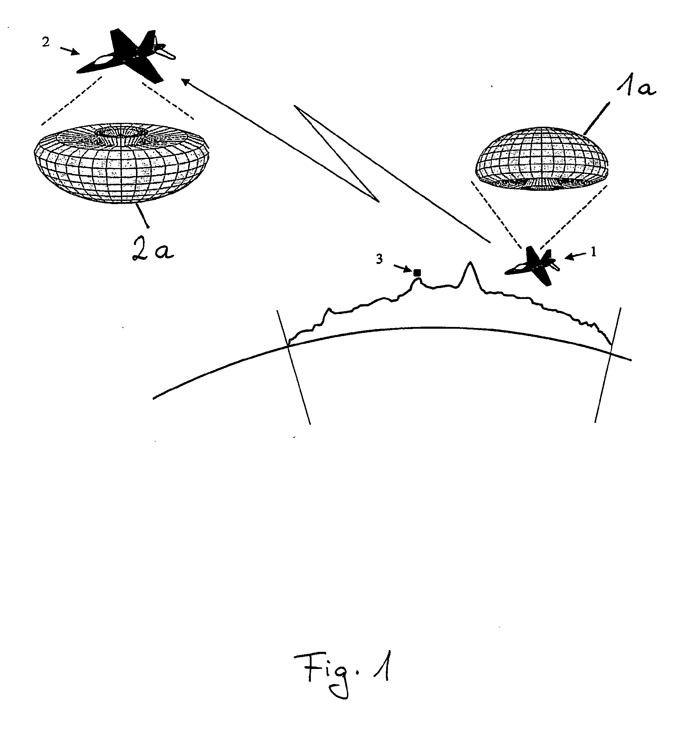

Die in der Figur 1 dargestellte Konstellation aus einem sendenden, tieffliegenden Flugzeug 1 und einem empfangenden, hochfliegenden Flugzeug 2, sowie einer in Bezug auf die dargestellten Flugzeuge als feindlich anzusehenden Ortungsstation 3 zeigt in schematischer Weise eine Situation in einer Aufklärungsmission in einem feindlichen Gelände, wie sie sich nach dem Stand der Technik darstellt. Die sich durch die üblichen Rundstrahl-Antennen ergebenden Antennen-Diagramme oder - Charakteristiken des sendenden Flugzeugs 1 sowie des empfangenden Flugzeugs 2 sind schematisch dargestellt und mit den Bezugszeichen 1a bzw. 2a versehen.

Die Ortungsstation 3 in einem Bedrohungsszenario ist in der Lage, elektromagnetische Strahlungen zu entdecken und deren Richtung zu bestimmen. Dies kann gegebenenfalls auch im Zusammenspiel mit anderen Ortungsstationen erfolgen. Die Ortbarkeit nimmt mit der Sendeleistung des jeweils Nutzdaten sendenden Flugzeugs 1 zu. Dessen Position kann dann durch übliche Verfahren wie z. B. Triangulation mit mehreren derartigen Ortungsstationen 3 mit großer Genauigkeit bestimmt werden.

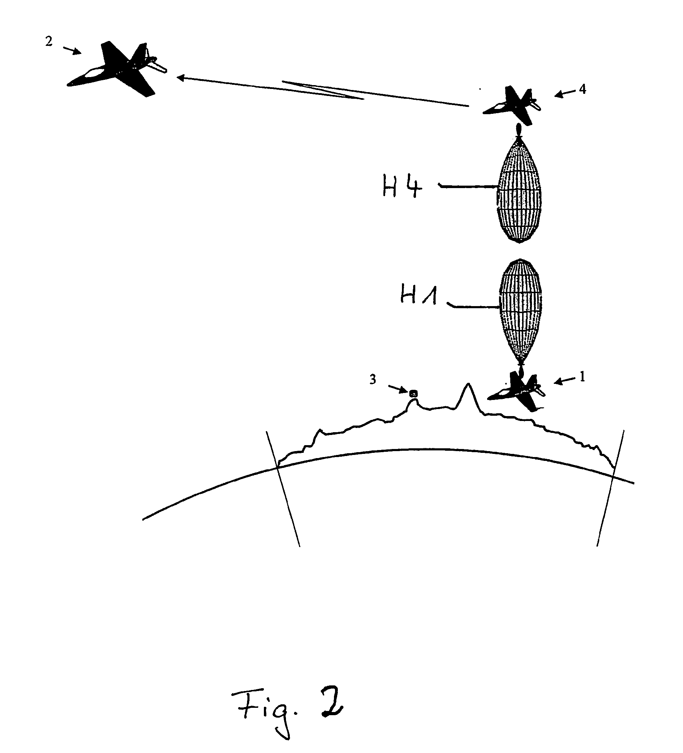

In der Figur 2 ist ebenfalls schematisch eine Konstellation aus einem sendenden, tieffliegenden Flugzeug 1 und einem empfangenden, hochfliegenden Flugzeug 2, sowie einer in Bezug auf die dargestellten Flugzeuge als feindlich anzusehenden Ortungsstation 3 dargestellt. Erfindungsgemäß ist ein zusätzliches, verhältnismäßig hochfliegendes Relais-Flugzeug 4 für den erfindungsgemäßen Nutzdaten-Austausch vorgesehen, das von dem tiefer fliegenden Flugzeug 1 Nutzdaten empfängt und an das für den Empfang vorgesehene Flugzeug 2 weiterleitet. Die Flughöhe des Relais-Flugzeugs 4 ist während der Nutzdaten-Übertragung größer als die Flughöhe des tieffliegenden Flugzeugs 1. Dabei ist die vom entsprechenden System des sendenden, verhältnismäßig tieffliegenden Flugzeugs 1 erzeugte Antennen-Hauptkeule H1 erfindungsgemäß innerhalb eines Öffnungskegels von maximal 30° vertikal zur Erdoberfläche nach oben zum Relais-Flugzeug 4 ausgerichtet. Letzteres empfängt mit einer erfindungsgemäß vertikal zur Erdoberfläche nach unten zum sendenden Flugzeug 1 ausgerichteten Antennen-Hauptkeule H4, die vorzugsweise einen Öffnungskegel von maximal 30° aufweist, die Nutzdaten und leitet diese mit üblichen Rundstrahl-Antennen oder auch gerichteten Antennen weiter.

Während das Flugzeug 1 die Ausrichtung seiner Antennen-Hauptkeule je nach Fluglage korrigieren muss, braucht das Relais-Flugzeug 4, aufgrund seines glatteren oder relativ wenig Fluglage oder Flughöhen-Änderungen aufweisenden Flugweges, kaum Nachführungen vorzunehmen. Befinden sich die Flugzeuge 1 und 4 nicht genau auf gleicher geographischer Position, also fliegen diese nicht übereinander, so ist zusätzlich eine entsprechende Schwenkung der Antennen-Hauptkeule des Flugzeugs 1 und 4 entsprechend den unterschiedlichen Positionen derselben vorzunehmen.
Dies erfordert die Übermittlung der Positionen der Flugzeuge 1 und 4, so dass mit der Kenntnis der eigenen Fluglage die Berechnung des Stellwinkels zur Antennen-Nachführung von Flugzeug 1 und gegebenenfalls auch des Relaisflugzeugs 4 erfolgen kann.

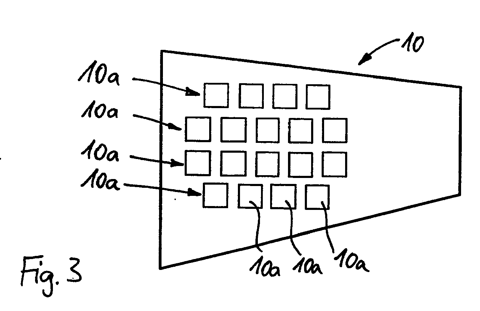

In der Figur 3 ist ein Ausführungsbeispiel einer Antennen-Vorrichtung zur Nutzdatenübertragung schematisch dargestellt. Es handelt sich dabei um eine Antennen-Vorrichtung aus einem Feld aus Einzelantennen (Elementar-Antennen) 10a, die auf den Flügelflächen der Flugzeuge 1 und 4 angebracht sind. Erfindungsgemäß ist eine Antennen-Bauart vorgesehen, bei der eine möglichst große Antennenfläche gegeben ist. Diese hängt von den Randbedingungen des Anwendungsfalls, also z.B. der Bau- und Einsatzart des Flugzeugs ab. Vorzugsweise ist eine Antennenfläche vorgesehen, die doppelt so groß ist wie bei einer Annahme des doppelten Antennengewinns einschließlich des Verlustes der Antenne.

Zur Ausrichtung der Antennen-Hauptkeule und zur Nutzdaten-Übertragung ist in dem sendenden Flugzeug 1 eine Vorrichtung N zur Übertragung von Nutzdaten vorgesehen mit:
- einem Nutzdaten-Sendemodul SM zur Bereitstellung der an das Relais-Flugzeug zu übertragenden Nutzdaten, mit
- einer Stell- oder Steuerungseinrichtung S1 zur Realisierung der Antennen-Übertragungseigenschaften und einer dieser zugeordneten Antennen-Stell- oder Ansteuerungseinheit S2,
- einer Empfangseinrichtung E zum Empfang von Daten vom Relais-Flugzeug,
- einem Threat Management System TM oder Bedrohungsbewertungs-System,
- einem Antennen-Ausrichtungsmodul F, das einem Fluglagen-Rechner zugeordnet ist.

Diese Einheiten sind funktional miteinander, z.B. über einen Datenbus verbunden, und können gerätetechnisch in eigenen Einheiten oder integriert in einem Rechner-Modul integriert sein.

Das Nutzdaten-Sendemodul SM empfängt die von einer Rechnereinheit und optional mit entsprechend zugeordneten Systemfunktionen aufbereiteten und von der Einrichtung N zu übertragenden Nutzdaten. Andererseits kann das Nutzdaten-Sendemodul SM Funktionen aufweisen, mit denen empfangene Nutzdaten an zugeordnete Einheiten oder zur funktionalen Weiterverarbeitung an weitere flugzeuginterne Systemen weitergeleitet werden können.

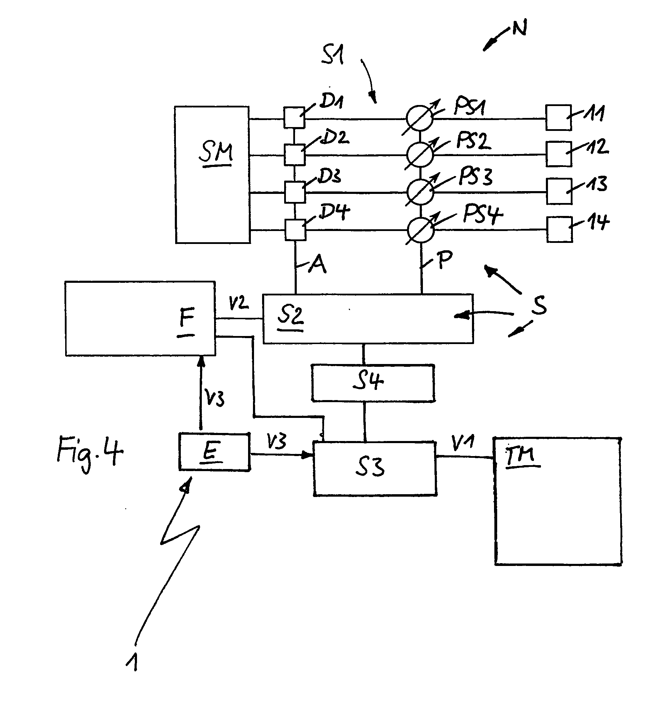

Dem Nutzdaten-Sendemodul SM oder der Vorrichtung zur Nutzdaten-Übertragung N ist eine Antennen-Ausrichtungseinheit S zugeordnet, die die Übertragungs-Eigenschaften der Antenne aufgrund von Kommandos des Ansteuerungsmoduls S2 festlegt und realisiert. In der Ausführungsform der Figur 4 weist die Antennen-Steuerungseinrichtung S1 vier Kanäle mit jeweils einem Dämpfungsglied D1, D2, D3, D4, einem Phasenschieber PS1, PS2, PS3, PS4 und einer Teilantenne 11, 12, 13, 14 auf. Die Anzahl der Kanäle richtet sich nach bekannten Kriterien und dem Anwendungsfall. Die Steuerungsgrößen sind die Amplituden A und Phasen P der Einzelantennen 11, 12, 13, 14, die an die Dämpfungsglieder D1, D2, D3, D4 bzw. Phasenschieber PS1, PS2, PS3, PS4 übermittelt werden, um die zugehörigen Teilantennen 11, 12, 13, 14 z.B. über das Nutzdaten-Sendemodul S2 mit Hochfrequenzsignalen unterschiedlicher Phase und Intensität anzusteuern. Es können je nach Anwendungsfall weitere Steuerungsgrößen nach dem Stand der Technik verwendet werden.

Zur Festlegung, ob überhaupt gesendet werden darf und gegebenenfalls mit welchen Übertragungseigenschaften, insbesondere zur Bestimmung der Amplituden A und Phasen P, ist dem Ansteuerungsmodul S2 eine Optimierungs-Einrichtung S3 und eine Entscheidungs-Einrichtung S4 zugeordnet. Die Optimierungs-Einrichtung bewertet verschiedene Faktoren oder Eingaben einer oder mehrerer oder sämtlicher dieser zugeordneten Funktionseinheiten, zu denen die Empfangs-Einrichtung E, das Antennen-Ausrichtungsmodul F und das Threat Management System TM gehören kann. Die Empfangs-Einrichtung E kann separat angeordnet sein. Daraus werden die optimalen Amplituden A und Phasen P für die Antennen-Steuerung S1 und somit die optimalen Übertragungs-Eigenschaften ermittelt. Dabei wird eine Charakteristik der Antennenkeule oder werden Übertragungs-Eigenschaften angestrebt, die eine schmale Antennen-Hauptkeule mit sehr kleinen Nebenzipfeln gewährleistet. Außerdem wird die Ausrichtung in einem Winkelbereich auf das Relais-Flugzeug je nach Bedrohung in Bezug auf das erdfeste Koordinatensystem nach oben unter Berücksichtigung der momentanen Flugzeuglage und den jeweiligen Flugzeugpositionen berücksichtet, so dass die Hauptkeule nicht in den Bedrohungsbereich strahlt.

Aufgrund von Vorgaben durch ein Entscheidungsmodul S4 oder der Optimierungs-Einrichtung S3 ermittelt das Ansteuerungsmodul S2 die Abstrahlungseigenschaften und die Sendeleistung der auf das Relais-Flugzeug gerichteten Antennenkeule. In einer weiteren Ausführungsform der Erfindung kann das Entscheidungsmodul S4 entfallen. Die Abstrahlungseigenschaften schließen den Winkelbereich der Abstrahlung über die Phasenverschiebung P für die Phasenschieber, die NebenzipfelDämpfung über die Amplituden A für die Dämpfungsglieder D1, D2, D3, D4 ein. Die Sendeleistung kann ebenfalls über die Verringerung der Dämpfung der Dämpfungsglieder bzw. die Verstärkung des Sendesignals erfolgen. Das Ansteuerungsmodul S2 weist zu deren Realisierung entsprechend Regelglieder oder digitale Regelalgorithmen nach dem Stand der Technik auf.

Der Optimierungs-Einrichtung S3 werden von dem Threat Management System TM Vorgaben für die Soll-Abstrahleigenschaften, die in die Optimierungs-Einrichtung S3 vorzugsweise in Form von Wahrscheinlichkeitszahlen einfließen, übermittelt. Diese Datenübermittlung ist in der Figur 4 mit dem Bezugszeichen V1 bezeichnet. Diese Daten können alternativ oder zusätzlich auch als echte Sollgrößen, d.h. als Maximal- oder Minimalgrößen übermittelt werden. Die Optimierungs-Einrichtung S3 errechnet die Soll-Abstrahleigenschaften aus einem optimalen oder höchstzulässigen Abstrahlungsprofil, der aus der Analyse und Bewertung des aktuellen Bedrohungsszenarios ermittelt wird. Dazu kann dem Threat Management System TM eine digitale Geländedatenbank zugeordnet werden, der vor und/oder während der Mission Bedrohungsdaten, wie z.B. die Position und Art von feindlichen militärischen Stellungen, sowie lokale Geländeformationen entnehmbar sind. Aus diesen Daten oder aus einzelnen dieser Daten bestimmt das Threat Management System TM einen maximal zulässigen oder günstigen Winkelbereich und eine Nebenzipfeldämpfung oder einen Bereich für die Nebenzipfeldämpfung für die Konfiguration der Antennen und deren die Antennenkeulen. Weiterhin ermittelt das Threat Management System TM eine maximale oder aufgrund von Wahrscheinlichkeiten günstige Sendeleistung. Diese Abstrahlungseigenschaften werden vorzugsweise mit Bedrohungsbewertungszahlen in Verbindung gebracht, so dass diese Daten als Wahrscheinlichkeiten zu der Optimierungs-Einrichtung S3 gelangen. Das Threat Management System TM bewertet diese Eingangsgrößen vorzugsweise mit Mitteln der Wahrscheinlichkeitsrechnung oder anderer Optimierungsverfahren.

Die Optimierungs-Einrichtung S3 erhält vom Fluglagenrechner bzw. dem Antennen-Ausrichtungsmodul F die Soll-Richtung der vom Steuerungsmodul S2 zu realisierenden Antennenkeule (Bezugszeichen V2). Erfindungsgemäß ist dies vorzugsweise derart realisiert, dass das Antennen-Ausrichtungsmodul F zu diesem Zweck die momentanen relativen räumlichen Fluglagen sowie die relativen Positionen der Flugzeuge 1 und 4 zueinander, d.h. der Fluglagen bzw. Positionen der Flugzeuge 1 und 4 relativ zueinander, ermittelt. Das Antennen-Ausrichtungsmodul F erhält dazu Eingangsdaten zur Ermittlung der relativen Fluglagen, zu denen Positionen der Flugzeuge 1, 4 oder die relative Position dieser Flugzeuge zueinander, die Fluglagen des Flugzeugs, mit dem eine Nutzdaten-Kommunikation oder ein Senden von Nutzdaten betrieben werden soll, sowie optional die Fluglagen des eigenen Flugzeugs von einem zugeordneten System oder Modul, falls dies nicht im Ausrichtungsmodul F selbst ermittelt wird. Informationen über die eigenen Fluglage kann dem Antennen-Ausrichtungsmodul F in einer Ausführungsform der Erfindung von einem zugeordneten Sensorsystem zur Verfügung gestellt werden. Informationen wie Fluglage und Position des Relais-Flugzeugs 4 werden dem Fluglagenrechner F über die Empfangseinrichtung E zugeführt (Bezugszeichen V3). Das Antennen-Ausrichtungsmodul F ermittelt aus diesen Größen eine Soll-Richtung für die Antennenkeule, die der Optimierungs-Einrichtung S3 zur Bewertung zugeführt wird.

Über die Empfangs-Einrichtung E kann die Optimierungseinrichtung S3 (Bezugszeichen V3) Daten oder Informationen über die Signal-Qualität der über das Nutzdaten-Sendemodul SM an das Relais-Flugzeug 4 übermittelten Nutzdaten erhalten. Die Beschreibung der Signal-Qualität kann bei einer digitalen Nutzdaten-Übertragung über Bewertungszahlen erfolgen.

Die Optimierungs-Einrichtung S3 ermittelt aus Eingangs-Größen, die
- ein Soll-Abstrahlprofil aufgrund des Bedrohungs-Szenarios,
- eine Soll-Richtung der Antennenkeule aufgrund der relativen Position des sendenden Flugzeugs 1 relativ zum Relais-Flugzeug 4 und der Fluglage des sendenden Flugzeugs 1,
- optional Daten zur Beschreibung der aktuellen Übertragungsqualität aufgrund von Informationen durch das Relais-Flugzeug 4,

umfassen, eine durch das Ansteuerungsmodul S2 zu erzeugende Antennenkeule oder durch das Ansteuerungsmodul S2 zu erzeugende Antennen-Übertragungseigenschaften.

Das Entscheidungsmodul S4 kann vorgesehen sein, um zu entscheiden, die Nutzdaten-Übertragung des sendenden Flugzeugs 1 zu stoppen, wenn die Wahrscheinlichkeit für die Ortbarkeit des sendenden Flugzeugs 1 einen Maximalwert oder einen ungünstigen Wert übersteigt.

Die Schwenkung der Antennen-Hauptkeule wird durch die Steuereinheit S bzw. das Ansteuerungsmodul S2 zweckmäßigerweise durch einen Mikroprozessor realisiert, vorgenommen, die die Phasenlagen der Einzelantennen nach Maßgabe des sich aus den Flugzeuglagen und den Positionen beider Flugzeuge ergebenden Stellwinkels für die zu erzeugenden Antennen-Diagramme bestimmt und den Phasenschiebern PS1, PS2, PS3, PS4 sowie den Dämpfungsgliedern mitteilt. Dadurch ist eine automatische Schwenkung der Antennen-Hauptkeulen in Abhängigkeit der relativen Flugzeuglagen und oder auch die relativen Positionen der Flugzeuge 1 und 4 möglich.

Die Pegel für die Ansteuerung der Teilantennen (Tappering) werden durch variable Dämpfungsglieder so festgelegt, dass die Nebenzipfeldämpfung sehr groß ist, wobei ein Wert von mindestens 30 dB anzustreben ist. Der daraus resultierende kleinere Gewinn der Antenne wird durch eine größere Antennenfläche ausgeglichen. Dies ist leicht möglich, da am Flügel reichlich Platz zur Verfügung steht.

Die Kontaktaufnahme zwischen den Flugzeugen 1 und 4, insbesondere während einer ungeplanten Mission, kann durch Realisierung eines Ortungssignals, welches Flugzeug 1 aussendet erfolgen. Dazu kann das Antennenfeld der Flugzeugs 1 so konfiguriert werden, dass eine breite Hauptkeule entsteht, mit der das nur "lauschende" Flugzeug 4 die Position von Flugzeug 1 bestimmen kann. Nach Herstellung der Übertragung kann dann aufgrund der Bewertung durch die Optimierungs-Einrichtung S3 die Übertragung mittels Übertragungs-Eigenschaften gemäss der Vorgaben der Optimierungs-Einrichtung S3 erfolgen.

Als Teilantennen für das Antennenfeld werden zweckmäßigerweise sehr flache Antennen z.B. Patch-Antennen oder Schlitzantennen verwendet, die leicht in die Flügelstruktur zu integrieren sind. Der Wirkungsgrad dieser Antennen hat keine große Bedeutung, da die Sendeleistung zum einen wegen des hohen Antennengewinns und zum anderen wegen der relativ kleinen zu überbrückende Entfernung von nur 20 bis maximal 30 km (maximale Flughöhe für das Relaisflugzeug) ohnehin sehr gering ist.

Um die Abstrahlung außerhalb des Übertragungspfades so gering wie möglich zu halten, beinhaltet die Steuereinheit S außerdem eine Einrichtung zur Pegelsteuerung (in Fig. 4 nicht gesondert dargestellt), die die Sendeleistung auf einen Wert reduziert, der zur Datenübertragung gerade noch erforderlich ist (Power Management). Die Steuerung erfolgt durch eine Rückmeldung der empfangenden Station.

Ein weiterer Vorteil dieser Art der Datenübertragung ist die Tatsache, dass für das aufklärende Flugzeug 1 (in der Regel ein kleines unbemanntes Flugzeug) nur eine geringe Leistung für die Stromversorgung erforderlich ist.

Durch das erfindungsgemäße Nachführungssystem N ist eine Nutzdaten-Übertragung mit einer gegenüber dem Stand der Technik stark reduzierten Sendeleistung insbesondere außerhalb der Hauptübertragungsrichtung möglich, die sowohl durch geringe Entfernung der beiden Flugzeuge als auch durch großen Gewinn der Antennen von Flugzeug 1 und Flugzeug 4 und der automatischen Reduzierung der Sendeleistung auf die zur Datenübertragung unbedingt nötigen Sendeleistung bestimmt ist. (Powermanagement). Eine äußerst kleine Abstrahlung in Richtung auf die feindliche Bodenstation 3 wird wegen einer erfindungsgemäß hohen Nebenzipfeldämpfung des Antennen-Diagrammes von Flugzeug 1 erreicht, die aufgrund der großen zur Verfügung stehenden Fläche auf Ober- bzw. Unterseite des Flügels leicht realisiert werden kann.

Erfindungsgemäß kann auf ein Powermanagement nach dem Stand der Technik verzichtet werden oder dieses nur eingeschränkt, d.h. mit geringem aufwand realisiert sein. In diesem Fall kann ein bestimmter Sendepegel fest eingestellt sein. Der Regelbereich für die Ausrichtung des Antennen-Diagramms ist relativ gering vorgesehen, da die Flughöhe nicht über 25 km vorgesehen ist.

## Patentansprüche

1. Vorrichtung zur Nutzdaten-Übertragung (N) zur Implementierung in einem Flugzeug (1) zur Übertragung von Nutzdaten an ein Relais-Flugzeug (4) über eine Antennen-Anordnung (10) mit steuerbarer Richtwirkung mittels eines Antennen-Ansteuerungsmoduls (S2) zur Steuerung der Abstrahlungseigenschaften und Sendeleistung, mit einem Nutzdaten-Sendemodul (SM) zur Bereitstellung von Nutzdaten an das Relais-Flugzeug, einer Empfangseinrichtung (E) zum Empfang von Informationen von dem Relais-Flugzeug (4), und einem Antennen-Ausrichtungsmodul (F), das einem Fluglagen-Rechner zugeordnet ist,
**dadurch gekennzeichnet, dass**
dem Ansteuerungsmodul (S2) ein Bedrohungsbewertungs-System (TM) und eine mit diesem in Verbindung stehende Optimierungs-Einrichtung (S3) zugeordnet ist, die
- ein Soll-Abstrahlprofil von dem Bedrohungsbewertungs-System (TM),
- ein Soll-Richtungsbereich der Antennenkeule von dem Antennen-Ausrichtungsmodul (F),
empfängt, die durch das Ansteuerungsmodul (S2) zu erzeugenden Antennen-Übertragungseigenschaften derart ermittelt, dass die Ortbarkeit in zuverlässiger Weise zumindest stark reduziert wird, und dem Ansteuerungsmodul (S2) als Steuerungs-Kommando übermittelt.

2. Vorrichtung zur Nutzdaten-Übertragung (N) über eine Antennen-Anordnung (10) mit steuerbarer Richtwirkung zur Implementierung in einem sendenden Flugzeug (1) nach dem Anspruch 1, **dadurch gekennzeichnet, dass** die Antennen-Übertragungseigenschaften den Winkelbereich, die Nebenzipfeldämpfung für die Abstrahlung der Antennenkeulen und/oder eine maximale Sendeleistung umfasst.

3. Vorrichtung zur Nutzdaten-Übertragung (N) über eine Antennen-Anordnung (10) mit steuerbarer Richtwirkung zur Implementierung in einem sendenden Flugzeug (1) nach einem der voranstehenden Ansprüche, **dadurch gekennzeichnet, dass** das Bedrohungsbewertungs-System (TM) Informationen über die aktuelle Übertragungsqualität empfängt und verwendet, wobei die aktuelle Übertragungsqualität von der Empfangs-Einrichtung (E) aufgrund von Informationen durch das Relais-Flugzeug (4) ermittelt wird.

4. Vorrichtung zur Nutzdaten-Übertragung (N) über eine Antennen-Anordnung (10) mit steuerbarer Richtwirkung zur Implementierung in einem sendenden Flugzeug (1) nach einem der voranstehenden Ansprüche, **dadurch gekennzeichnet, dass** die Soll-Richtung der Antennenkeule im Antennen-Ausrichtungsmodul (F) aufgrund der relativen Position des sendenden Flugzeugs (1) relativ zum Relais-Flugzeug (4) und der Fluglage des sendenden Flugzeugs (1) ermittelt wird.

5. Vorrichtung zur Nutzdaten-Übertragung (N) über eine Antennen-Anordnung (10) mit steuerbarer Richtwirkung zur Implementierung in einem sendenden Flugzeug (1) nach einem der voranstehenden Ansprüche, **dadurch gekennzeichnet, dass** eine mit der Antennen-Ansteuerungsmoduls (52) in Verbindung stehende Entscheidungs-Einrichtung (S4) vorgesehen ist, die die Nutzdaten-Übertragung des sendenden Flugzeugs (1) stoppt, wenn die Wahrscheinlichkeit für die Ortbarkeit des sendenden Flugzeugs (1) einen Vergleichswert übersteigt.

6. Vorrichtung zur Nutzdaten-Übertragung (N) über eine Antennen-Anordnung (10) mit steuerbarer Richtwirkung zur Implementierung in einem sendenden Flugzeug (1) nach einem der voranstehenden Ansprüche, **dadurch gekennzeichnet, dass** die Übertragungseigenschaften durch die Antennen-Steuereinheit (S) derart eingestellt wird, dass die Nebenzipfeldämpfung mindestens 30 dB ist.

7. Verfahren zur Nutzdaten-Übertragung (N), bei dem Nutzdaten von einem ersten Flugzeug (1) an ein Relais-Flugzeug (4) zur Weitergabe an ein weiteres Flugzeug (2) übertragen werden, wobei in dem ersten Flugzeug (1) und dem Relais-Flugzeug (4) eine Vorrichtung zur Nutzdaten-Übertragung (N) angeordnet ist, wobei in dem sendenden Flugzeug (1) eine Optimierung der Übertragungs-Eigenschaften derart erfolgt, dass die Ortbarkeit in zuverlässiger Weise zumindest stark reduziert wird, bei der
- ein Soll-Abstrahlprofil von einem Bedrohungsbewertungs-System (TM),
- ein Soll-Richtungsbereich der Antennenkeule von einem Antennen-Ausrichtungsmodul (F),
bewertet werden.

8. Verfahren zur Nutzdaten-Übertragung (N) nach dem Anspruch 7, **dadurch gekennzeichnet, dass** weiterhin die aktuelle Übertragungsqualität, die mittels von einer Empfangs-Einrichtung (E) zugeführten Informationen ermittelt wird, bewertet wird.

## Claims

1. Apparatus for payload data transmission (N) for implementation in an aircraft (1) for transmission of payload data to a relay aircraft (4) via an antenna arrangement (10) having a controllable directional effect by means of an antenna drive module (S2) for controlling the emission characteristics and transmission power, having a payload data transmission module (SM) for providing payload data to the relay aircraft, a receiving device (E) for receiving information from the relay aircraft (4), and an antenna alignment module (F) which is associated with a flight attitude computer,
**characterized in that**
the drive module (S2) has an associated threat assessment system (TM) and an associated optimization device (S3) which is connected to it and receives
- a nominal emission profile from the threat assessment system (TM),
- a nominal direction area of the antenna lobe from the antenna alignment module (F),
which determines antenna transmission characteristics to be produced by the drive module (S2) such that the capability for location is at least greatly reduced in a reliable manner, and is transmitted to the drive module (S2) as a control command.

2. Apparatus for payload data transmission (N) via an antenna arrangement (10) with a controllable directional effect for implementation in a transmitting aircraft (1) according to Claim 1, **characterized in that** the antenna transmission characteristics comprise the angle range, the sidelobe attenuation for the emission of the antenna lobes and/or a maximum transmission power.

3. Apparatus for payload data transmission (N) via an antenna arrangement (10) with a controllable directional effect for implementation in a transmitting aircraft (1) according to one of the preceding claims, **characterized in that** the threat assessment system (TM) receives and uses information about the current transmission quality, with the current transmission quality being determined by the receiving device (E) on the basis of information through the relay aircraft (4).

4. Apparatus for payload data transmission (N) via an antenna arrangement (10) with a controllable directional effect for implementation in a transmitting aircraft (1) according to one of the preceding claims, **characterized in that** the nominal direction of the antenna lobe is determined in the antenna alignment module (F) on the basis of the relative position of the transmitting aircraft (1) relative to the relay aircraft (4), and the flight attitude of the transmitting aircraft (1).

5. Apparatus for payload data transmission (N) via an antenna arrangement (10) with a controllable directional effect for implementation in a transmitting aircraft (1) according to one of the preceding claims, **characterized in that** a decision device (S4) is provided, which is connected to the antenna drive module (S2) and stops the payload data transmission of the transmitting aircraft (1) when the probability of being able to locate the transmitting aircraft (1) exceeds a comparison value.

6. Apparatus for payload data transmission (N) via an antenna arrangement (10) with a controllable directional effect for implementation in a transmitting aircraft (1) according to one of the preceding claims, **characterized in that** the transmission characteristics are adjusted by the antenna control unit (S) such that the sidelobe attenuation is at least 30 dB.

7. Method for payload data transmission (N), in which payload data is transmitted from a first aircraft (1) to a relay aircraft (4) in order to be passed onto a further aircraft (2), wherein an apparatus for payload data transmission (N) is arranged in the first aircraft (1) and in the relay aircraft (4), wherein the transmission characteristics in the transmitting aircraft (1) are optimized such that the capability to locate it is reliably at least greatly reduced, in which
- a nominal emission profile is assessed by a threat assessment system (TM), and
- a nominal direction area of the antenna lobe is assessed by an antenna alignment module (F).

8. Method for payload data transmission (N) according to Claim 7, **characterized in that** the current transmission quality, which is determined by means of information supplied to a receiving device (E), is also assessed.

## Revendications

1. Dispositif de transmission de données utiles (N) destiné à être mis en oeuvre dans un aéronef (1) pour la transmission de données utiles à un aéronef relais (4) par le biais d'un arrangement d'antennes (10) à directivité contrôlable au moyen d'un module de commande d'antenne (S2) en vue de contrôler les propriétés de rayonnement et la puissance d'émission, comprenant un module émetteur de données utiles (SM) destiné à délivrer des données utiles à l'aéronef relais, un dispositif de réception (E) pour recevoir des informations de la part de l'aéronef relais (4) et un module d'orientation d'antenne (F) qui est associé à un calculateur d'assiette,
**caractérisé en ce que**
un système d'évaluation de menace (TM) et un dispositif d'optimisation (S3) en liaison avec celui-ci sont associés au module de commande (S2), lequel dispositif d'optimisation (S3) reçoit
- un profil de rayonnement de consigne de la part du système d'évaluation de menace (TM),
- une plage de directions de consigne du lobe de rayonnement de l'antenne de la part du module d'orientation d'antenne (F),
lequel dispositif d'optimisation (S3) détermine les propriétés de transmission d'antenne à générer par le module de commande (S2) de telle sorte que la possibilité de localisation peut être réduite au moins fortement de manière fiable et les communique au module de commande (S2) en tant qu'instruction de contrôle.

2. Dispositif de transmission de données utiles (N) par le biais d'un arrangement d'antennes (10) à directivité contrôlable destiné à être mis en oeuvre dans un aéronef émetteur (1) selon la revendication 1, **caractérisé en ce que** les propriétés de transmission d'antenne incluent la plage angulaire, l'amortissement des lobes secondaires pour le rayonnement du lobe de rayonnement de l'antenne et/ou une puissance d'émission maximale.

3. Dispositif de transmission de données utiles (N) par le biais d'un arrangement d'antennes (10) à directivité contrôlable destiné à être mis en oeuvre dans un aéronef émetteur (1) selon l'une des revendications précédentes, **caractérisé en ce que** le système d'évaluation de menace (TM) reçoit et utilise des informations sur la qualité de transmission actuelle, la qualité de transmission actuelle étant déterminée par le dispositif de réception (E) sur la base des informations obtenues par l'aéronef relais (4).

4. Dispositif de transmission de données utiles (N) par le biais d'un arrangement d'antennes (10) à directivité contrôlable destiné à être mis en oeuvre dans un aéronef émetteur (1) selon l'une des revendications précédentes, **caractérisé en ce que** la direction de consigne du lobe de rayonnement de l'antenne est déterminée dans le module d'orientation d'antenne (F) en fonction de la position relative de l'aéronef émetteur (1) par rapport à l'aéronef relais (4) et de l'assiette de l'aéronef émetteur (1).

5. Dispositif de transmission de données utiles (N) par le biais d'un arrangement d'antennes (10) à directivité contrôlable destiné à être mis en oeuvre dans un aéronef émetteur (1) selon l'une des revendications précédentes, **caractérisé en ce qu'**il est prévu un dispositif de décision (S4) en liaison avec le module de commande d'antenne (S2), lequel arrête la transmission des données utiles par l'aéronef émetteur (1) lorsque la probabilité de possibilité de localisation de l'aéronef émetteur (1) dépasse une valeur comparative.

6. Dispositif de transmission de données utiles (N) par le biais d'un arrangement d'antennes (10) à directivité contrôlable destiné à être mis en oeuvre dans un aéronef émetteur (1) selon l'une des revendications précédentes, **caractérisé en ce que** les propriétés de transmission par le module de commande d'antenne (S) sont réglées de telle sorte que l'amortissement des lobes secondaires est d'au moins 30 dB.

7. Procédé de transmission de données utiles (N), selon lequel des données utiles sont transmises d'un premier aéronef (1) à un aéronef relais (4) en vue d'être retransmises à un autre aéronef (2), un dispositif de transmission de données utiles (N) étant présent dans le premier aéronef (1) et dans l'aéronef relais (4), une optimisation des propriétés de transmission étant réalisée dans l'aéronef émetteur (1) de telle sorte que la possibilité de localisation est réduite au moins fortement de manière fiable, selon laquelle
- un profil de rayonnement de consigne est évalué par un système d'évaluation de menace (TM),
- une plage de directions de consigne du lobe de rayonnement de l'antenne est évaluée par un module d'orientation d'antenne (F).

8. Procédé de transmission de données utiles (N) selon la revendication 7, **caractérisé en ce qu'**en outre la qualité de transmission actuelle, laquelle est déterminée au moyen des informations acheminées par un dispositif de réception (E), est évaluée.
